Europäisches Patentamt

**European Patent Office**

**Office européen des brevets**

(11) Numéro de publication: **0 191 670**
A1

# DEMANDE DE BREVET EUROPEEN

(21) Numéro de dépôt: **86400102.9**

(22) Date de dépôt: **20.01.86**

(51) Int. Cl.⁴: **G 11 B 25/02,** G 11 B 33/00, G 11 B 3/00, G 11 B 5/00

---

(30) Priorité: **21.01.85 FR 8500795**

(43) Date de publication de la demande: **20.08.86 Bulletin 86/34**

(84) Etats contractants désignés: **AT BE CH DE GB IT LI LU NL SE**

(71) Demandeur: **Obeniche, Paul, 1, rue Paul Cézanne, F-75008 Paris (FR)**

(72) Inventeur: **Obeniche, Paul, 1, rue Paul Cézanne, F-75008 Paris (FR)**

(74) Mandataire: **Chereau, Louis et al, Novapat-Cabinet Chereau 107, Boulevard Péreire, F-75017 Paris (FR)**

(54) **Dispositif d'enregistrement d'un message sonore sur la surface intérieure d'un anneau, dispositif de lecture correspondant et anneau ainsi enregistré.**

(57) Le dispositif comporte une platine (1) rotative coopérant avec une tête d'enregistrement (11) ou de lecture. La platine (1) comprend un mandrin (21) équipé d'au moins deux mors (3), un orifice (2) situé entre les mors (3) et un arbre (5) cylindrique, creux, perpendiculaire au plan contenant l'anneau (10) et dont l'axe passe par le centre de l'orifice (2). La platine (1) est supportée par des paliers (6) placés sur l'arbre (5) et qui en autorisent la rotation. Un moteur (8) fait tourner la platine (1), avantageusement par entraînement direct, au moyen d'un galet (9). La tête d'enregistrement (11) ou de lecture est fixée à l'extrémité d'un bras (13) passant à l'intérieur de l'arbre (5) et actionné par un organe de positionnement (14).

Le dispositif selon l'invention permet l'enregistrement, par gravure d'un microsillon ou par magnétisation d'un ruban magnétique, d'un message personnalisé à l'intérieur d'une bague. Le dispositif de lecture correspondant permet de l'écouter.

0191670

1.

La présente invention a pour objet un dispositif d'enregistrement d'un message sonore sur la surface
intérieure d'un anneau, en particulier un dispositif de
gravure d'un microsillon, le dispositif de lecture correspondant ainsi que l'anneau porteur d'un tel message.

Il est d'un usage courant de faire graver à l'intérieur de certaines bagues, telles que bagues de fiançaille, alliances, etc. une inscription de type commémoratif, notamment un ou plusieurs noms, une date etc..
Etant donné le faible périmètre des bagues et la dimension
des caractères alphabétiques et des chiffres gravés, qui
doivent être lisibles de préférence sans qu'on ait recours
à un instrument optique de grossissement, le message inscrit sur la surface intérieure desdites bagues est toujours
fort succint.

Pour faire d'une bague le support d'un message
non plus laconiquement commémoratif comme ceux que l'on
peut fixer par la gravure d'une inscription, mais au contraire d'un message à la fois plus étoffé et personnel,
on a imaginé d'enregistrer sur la surface intérieure de ladite bague un message sonore. Placé à l'intérieur de la bague, le message, quel que soit le mode d'enregistrement choisi, se trouve protégé. Le message ainsi enregistré peut ensuite être délivré grâce à un dispositif de lecture approprié. L'intérêt que présente le choix du canal sonore pour la diffusion du message porté par la bague est multiple : il lui permet de pouvoir comporter musique et propos, d'être relativement long, d'avoir, du fait de son étendue, un tour personnel, original, et enfin, de receler l'affectivité inhérente aux intonations de la voix.

Pour fabriquer des bagues supportant des messages de ce type on prévoit, selon l'invention, un dispositif d'enregistrement d'un message sonore sur la surface intérieure d'un anneau, en particulier un dispositif de gravure d'un microsillon, et le dispositif de lecture correspondant.

Le dispositif d'enregistrement d'un message sonore sur la surface intérieure d'un anneau selon l'invention comporte une platine de support de l'anneau rotative et une tête d'enregistrement fixée à l'extrémité d'un bras mobile dans un plan, ce plan étant perpendiculaire au plan contenant l'anneau.

Le dispositif de lecture d'un message sonore enregistré sur la surface intérieure d'un anneau selon l'invention comporte une platine de support de l'anneau rotative et une tête de lecture fixée à l'extrémité d'un bras mobile dans un plan, ce plan étant perpendiculaire au plan contenant l'anneau.

Selon une caractéristique de l'invention, la tête d'enregistrement ou de lecture est fixée au bout d'un bras passant à l'intérieur d'un arbre cylindrique creux de la platine autour de l'axe longitudinal duquel la platine tourne.

Selon une autre caractéristique de l'invention, la tête d'enregistrement est une tête de gravure de microsillon ou une tête d'enregistrement magnétique et la tête de lecture est une tête de lecture de microsillon ou une tête de lecture magnétique.

L'anneau selon l'invention, qui peut être une bague ou un bracelet comporte sur sa surface intérieure une piste faisant au moins un tour , supportant un message enregistré susceptible d'être lu par un appareil de lecture approprié. La piste de l'anneau peut être un microsillon ou une piste magnétique.

D'autres caractéristiques et avantages de la présente invention apparaîtront mieux à la lecture de la description qui va suivre, faite en relation avec les dessins annexés sur lesquels :

La figure 1 est une vue de face schématique d'une platine d'enregistrement ou de lecture supportant un anneau;

La figure 2 est une vue de côté schématique d'une platine supportant un anneau et coopérant avec une tête de gravure;

La figure 3 est une vue de côté schématique d'une platine supportant un anneau et coopérant avec une tête de lecture;

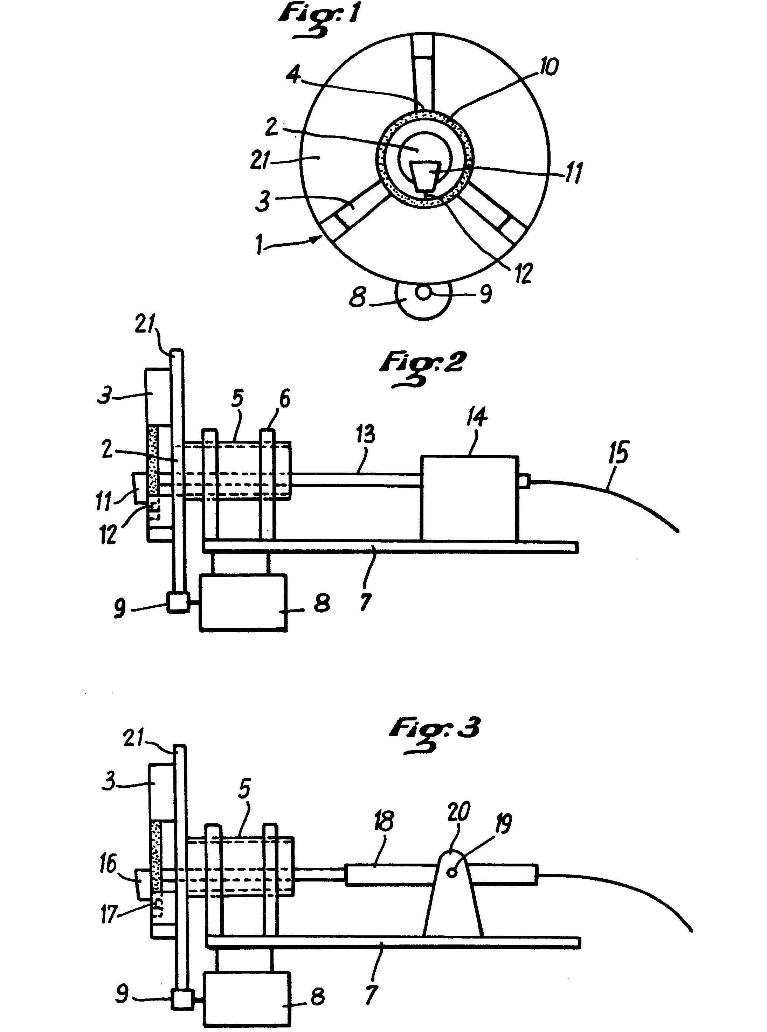

La platine 1 représentée sur les figures 1, 2 et 3 comporte un mandrin 21 percé en son centre d'un trou 2 et supportant des mors 3 (avantageusement au nombre de 3). Les mors 3 sont mobiles selon des directions radiales. Les distances de leur arête 4 de serrage au centre du mandrin 21 sont égales. Leur déplacement vers le centre ou la périphérie du mandrin 21 est simultané et est obtenu par un mécanisme connu en soi, du type de ceux qui équipent les mandrins de tour par exemple. La platine 1 comporte en outre un arbre 5 cylindrique creux fixé sur l'arrière du mandrin 21 de façon que son axe passe par le centre dudit mandrin. L'arbre 5 est maintenu par des paliers 6 (au nombre de deux sur les figures 2 et 3), lesquels comportent avantageusement des roulements pour autoriser sa rotation autour de son axe lontitudinal (éventuellement, dans le cas du dispositif de lecture d'un microsillon, les paliers 6 autorisent aussi la translation de l'arbre 5 dans le sens longitudinal). Les paliers 6 sont fixés sur un support 7 auquel est assujetti également un moteur 8 destiné à entraîner la platine 1 en rotation. L'axe du moteur 8 est avantageusement parallèle à l'axe de l'arbre 5. Le moteur 8 entraîne la platine 1 ou bien directement, grâce à un galet 9 fixé à l'extrémité de son axe et venant au contact de la tranche du mandrin 21, ou bien indirectement, par l'intermédiaire d'une courroie reliant l'arbre 5 à l'axe du moteur 8.

Sur la figure 2, on a représenté la platine décrite plus haut, maintenant un anneau 10 entre ses mors et coopérant avec une tête de gravure 11. La tête de gravure 11 porte un stylet 12 et est fixée à une extrémité d'un bras 13. Le bras 13 passe à l'intérieur de l'arbre 5 de la platine . L'autre extrémité du bras 13 est assujettie à un organe de positionnement 14 connu en soi grâce auquel il peut être mu de haut en bas et de bas en haut, d'avant en arrière et d'arrière en avant. A l'intérieur du bras 13 passent des câbles 15 qui transmettent à la tête de gravure les impulsions électriques correspondant au message sonore à graver.

Le fonctionnement du dispositif de gravure décrit ci-dessus est le suivant :on serre dans les mors 3 l'anneau à l'intérieur duquel on veut graver un microsillon. On positionne, au moyen de l'organe 14 (mouvement d'avant en arrière ou d'arrière en avant), le stylet 12 à l'aplomb de la zone de l'anneau où l'on désire voir commencer le microsillon. On applique, au moyen de l'organe 14 (mouvement de haut en bas), le stylet 12 sur l'anneau avec la force initiale requise pour la gravure du métal dont ledit anneau est fait. On met simultanément sous tension le moteur 8 et l'organe 14, lequel à ce stade de fonctionnement du dispositif imprime au bras 13 un mouvement d'avant en arrière régulier (ou d'arrière en avant selon l'arête intérieure de l'anneau à proximité de laquelle on a placé initialement l'anneau). Un microsillon en forme d'hélice résulte de la combinaison simultanée du mouvement de rotation de la platine et du mouvement de translation du bras 13. Dans ce microsillon sont reproduites, de façon analogique, les impulsions électriques, correspondant au message à enregistrer, véhiculées par les câbles 15.

Sur la figure 3, on a représenté une platine identique à celle qui a été décrite plus haut, maintenant un anneau 10 entre ses mors et coopérant avec une tête de lecture 16. La tête de lecture 16, porte un saphir 17 et est fixée à une extrémité d'un bras 18, lequel peut pivoter autour d'un axe 19 parallèle au support 7 et perpendiculaire à l'axe longitudinal dudit bras. Le bras 18 passe à l'intérieur de l'arbre 5 et est maintenu par deux pièces 20 de support. Des câbles 21 sont disposés à l'intérieur du bras 18, qui relient la tête de lecture à un amplificateur (non représenté sur la figure). La lecture d'un microsillon en forme d'hélice impose le déplacement relatif de la tête de lecture 16 et de l'anneau 10, selon une direction parallèle à l'axe longitudinal du bras 18. Pour obtenir ce déplacement, deux solutions sont possibles; ou bien l'anneau 10, c'est-à-dire la platine, reste fixe et la longueur du bras 18 varie; ou bien l'anneau 10, c'est-à-dire la platine, est mobile et le bras 18 est de longueur fixe. Dans le premier cas on prévoit que les paliers 6 n'autorisent pas le déplacement longitudinal de l'arbre 5 et que le bras 18 est télescopique. (On peut aussi envisager d'assujettir le bras 18 à un organe de positionnement ayant les mêmes fonctions que l'organe 14 décrit plus haut au sujet du dispositif de gravure. Cette disposition est indispensable dans le cas où l'on déciderait de placer la platine dans un plan horizontal et non plus dans un plan vertical). Dans le second cas,on prévoit que le bras 18 est une simple tige et que les paliers 6 autorisent le déplacement longitudinal de l'arbre 5.

Le fonctionnement de ce dispositif de lecture ne diffère pas de celui d'un tourne-disque usuel.

La vitesse de rotation de la platine selon l'invention,qu'elle équipe un dispositif d'enregistrement ou un dispositif de gravure, reste la même. Cette vitesse est déterminée en fonction de la qualité sonore que l'on exige du dispositif de lecture. Il va de soi que plus cette vitesse est faible , plus le message enregistré peut être long, mais moins la fidélité de la reproduction est garantie.

On peut utiliser d'autres modes d'enregistrement, et donc de lecture, que ceux qui viennent d'être décrits. En particulier une variante de l'invention consiste à fixer à l'intérieur de l'anneau, par collage notamment,une piste magnétique (ceci n'est envisageable que si l'anneau est fait d'un matériau amagnétique, ce qui, au demeurant est généralement le cas des métaux utilisés en joaillerie). On prévoit un dispositif d'enregistrement et un dispositif de lecture comportant la même platine que celle décrite plus haut. La tête (de lecture ou d'enregistrement) de ces dispositifs est fixée à l'extrémité d'un bras qui passe à l'intérieur de l'arbre 5. L'autre extrémité de ce bras est assujettie à un organe de positionnement pouvant imprimer audit bras un mouvement de haut en bas et de bas en haut, grâce auquel la tête est mise en contact de la piste magnétique de l'anneau, quel que soit le diamètre de celui-ci.

Il va de soi que, si on a représenté sur les figures 1, 2 et 3, des dispositifs sur lesquels, le mandrin 21 de la platine 1 était dans un plan vertical et le bras 13, 18 supportant la tête 11, 16 approxiativement horizontal,il est tout à fait possible de concevoir des dispositifs dont la platine 1 serait par exemple dans un plan horizontal et le bras 13,18 supportant la tête 11, 16 vertical. Cela imposerait naturellement, comme il a été mentionné plus haut, que le bras 18 du dispositif de lecture de microsillon soit assujetti à un organisme de positionnement comparable à celui de la platine de gravure.

La présente invention n'est pas limitée aux exemples de réalisation qui viennent d'être décrits, elle est au contraire susceptible de modifications et de variantes qui apparaîtront à l'homme de l'art.

REVENDICATIONS

1 - Dispositif d'enregistrement d'un message sonore sur la surface intérieure d'un anneau (10), caractérisé en ce qu'il comporte une platine (1) de support de l'anneau (10) rotative et une tête d'enregistrement (11) fixée à l'extrémité d'un bras (13) mobile dans un plan (II) ce plan étant perpendiculaire au plan (I) contenant l'anneau (10).

2 - Dispositif de lecture d'un message sonore enregistré sur la surface intérieure d'un anneau (10), caractérisé en ce qu'il comporte une platine (1) de support de l'anneau (10) rotative et une tête de lecture (16) fixée à l'extrémité d'un bras (18) mobile dans un plan (II), ce plan étant perpendiculaire au plan (I) contenant l'anneau (10).

3 - Dispositif selon une des revendications précédentes, caractérisé en ce qu'il comporte en outre au moins un palier (6) pour supporter la platine (1) et en permettre la rotation,un moteur (8) pour faire tourner la platine (1) et un organe (14) de positionnement du bras (13) par rapport à l'anneau (10).

4 - Dispositif selon la revendication 2, caractérisé en ce qu'il comporte en outre au moins un palier (6) pour supporter la platine (1) et en permettre la rotation , un moteur (8) pour faire tourner la platine (1) et un support (20) de bras (18) comprenant un axe (19) perpendiculaire auplan (II) autour duquel ledit bras peut pivoter dans le plan (II).

5 - Dispositif selon une des revendications précédentes, caractérisé en ce que la platine (1) comporte un mandrin (21) comprenant au moins deux mors (3) pour maintenir un anneau (10), un orifice (2) débouchant entre les mors du mandrin et un arbre (5) cylindrique, creux, perpendiculaire au plan (I) et dont l'axe passe par le centre de l'orifice (2).

6 - Dispositif selon la revendication 5, caractérisé encequele bras (13) supportant la tête d'enregistrement (11) passe à l'intérieur de l'arbre (5).

7 - Dispositif selon la revendication 5, caractérisé en ce que le bras (18) supportant la tête de lecture (16) passe à l'intérieur de l'arbre (5).

8 - Dispositif selon une des revendications précédentes, caractérisé en ce que l'axe du moteur (8) est parallèle à l'arbre (5) et que le moteur (8) entraîne la platine (1) en rotation au moyen d'une courroie.

9 - Dispositif selon une des revendications précédentes, où le mandrin (21) est circulaire, caractérisé en ce que l'axe du moteur (8) est parallèle à l'arbre (5) et que le moteur (8) entraîne la platine (1) au moyen d'un galet (9) coopérant avec la surface périphérique du mandrin (21).

10 - Dispositif selon une des revendications 2 à 9, caractérisé en ce que les paliers (6) n'autorisent pas la translation longitudinale de l'arbre (5) et que le bras (13) est télescopique.

11 - Dispositif selon une des revendications 2 à 9, caractérisé en ce que les paliers (6) autorisent la translation longitudinale de l'arbre (5) et que la longueur du bras (13) est constante.

12 - Dispositif selon la revendication 1, caractérisé en ce que la tête d'enregistrement est une tête de gravure (11) de microsillon.

13 - Dispositif selon la revendication 1, caractérisé en ce que la tête d'enregistrement est une tête d'enregistrement magnétique.

14 - Dispositif selon la revendication 2, caractérisé ence que la tête de lecture est une tête de lecture (16) de microsillon.

15 - Dispositif selon la revendication 2, caractérisé en ce que la tête de lecture est une tête de lecture magnétique.

16- Anneau, tel que bague ou bracelet, caractérisé en ce qu'il comporte sur sa surface intérieure une piste, faisant au moins un tour, supportant un message enregistré susceptible d'être lu par un appareil de lecture approprié.

17 - Anneau selon la revendication 16, caractérisé en ce que sa piste est un microsillon.

18 - Anneau selon la revendication 16, caractérisé en ce que sa piste est une piste magnétique.

Fig:1

Fig:2

Fig:3

Office européen
des brevets

**RAPPORT DE RECHERCHE EUROPEENNE**

Numéro de la demande

EP  86 40 0102

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | PATENTS ABSTRACTS OF JAPAN, vol. 7, no. 270 (P-240) [1415], 2 décembre 1983, page 95 P 240; & JP - A - 58 150 176 (NIPPON VICTOR K.K.) 06-09-1983 * Abrége; figures * | 1,2,16 | G 11 B 25/02<br>G 11 B 33/00<br>G 11 B 3/00<br>G 11 B 5/00 |
| A | GB-A-1 482 668 (OKIKIOLU) * Page 2, ligne 24 - page 3, ligne 30; figures 1-4 * | 1,2,16 | |
| A | US-A-1 853 966 (A. ECKERT) | | |
| A | GB-A-1 209 546 (W. POSADAS) | | |
| A | US-A-3 928 928 (P. KALUST) | | DOMAINES TECHNIQUES RECHERCHES (Int. Cl.4)<br><br>G 11 B |
| A | FR-A-1 603 996 (MATTEL) | | |
| A | US-A-3 675 930 (W. SUMMERFIELD) | | |
| A | US-A-4 169 970 (M. OPIELA) | | |
| | --- -/- | | |

Le présent rapport de recherche a été établi pour toutes les revendications

| Lieu de la recherche | Date d'achèvement de la recherche | Examinateur |
|---|---|---|
| LA HAYE | 02-05-1986 | DEVERGRANNE C.A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03.82

# 0191670

**Office européen des brevets**

**RAPPORT DE RECHERCHE EUROPEENNE**

Numero de la demande

EP 86 40 0102

| DOCUMENTS CONSIDERES COMME PERTINENTS | | | Page 2 | |
|---|---|---|---|---|
| Catégorie | Citation du document avec indication, en cas de besoin, des parties pertinentes | Revendication concernée | CLASSEMENT DE LA DEMANDE (Int. Cl.4) | |
| A | US-A-3 472 515 (E. KERWIN) | | | |
| | ----- | | | |
| | | | DOMAINES TECHNIQUES RECHERCHES (Int. Cl.4) | |

Le présent rapport de recherche a été établi pour toutes les revendications

| Lieu de la recherche | Date d'achèvement de la recherche | Examinateur |
|---|---|---|
| LA HAYE | 02-05-1986 | DEVERGRANNE C.A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82